# EUROPEAN PATENT APPLICATION

(11) **EP 2 985 894 A1**
(43) Date of publication of application: **17.02.2016**
(21) Application number: 14461560.6
(22) Date of filing: 12.08.2014
(51) Int. Cl.: H02K 26/00

(54) **Magnetic armature**

(71) Applicant: HS Wroclaw Sp. z o.o., 51-317 Wroclaw (PL)
(72) Inventor: Cichon, Przemyslaw, 59-600 Lwówek Slaski (PL)
(74) Representative: Gittins, Alex Michael

(57) **Abstract**

A magnetic armature for a torque motor is provided, comprising a pivot portion and at least one arm portion extending from said pivot portion, wherein the smallest cross-sectional area of said armature at said pivot portion is at least 60% of the smallest cross-sectional area of said armature at said at least one arm portion.

## Description

The present disclosure generally relates to a magnetic armature for a torque motor, and more particularly to an electrohydraulic valve or servovalve comprising the magnetic armature and/or torque motor.

### BACKGROUND

Electrohydraulic valves (EHVs) are used in a number of applications to control how hydraulic or pneumatic fluid is ported to a hydraulically or pneumatically controlled device, for example an actuator.

These and similar types of valve, for example a pneumatic or fuel servovalve, may incorporate a torque motor comprising a magnet assembly, armature and a flapper. The magnet assembly may incorporate electromagnets to control movement of the armature. The flapper is coupled to the armature and extends into a controlling medium, for example a flow of hydraulic fluid. Thus, movement of the armature causes corresponding movement of the flapper, which controls the fluid pressure and/or fluid flow of the hydraulic fluid.

Conventionally, the armature is a rectangular plate having a centre, or pivot portion with two arms extending in opposite directions from the centre portion. An aperture is formed in the centre portion, and a first end of the flapper extends into this aperture and is coupled thereto. Two electromagnets are located around each arm of the armature. Energising the electromagnets causes the armature to rotate about its centre, or pivot portion. This causes simultaneous movement of the flapper, the second opposing end of which extends into a controlling medium, for example a flow of hydraulic fluid as discussed above.

The conventional armature has a longitudinal axis and the cross-sectional area of the armature varies greatly along this axis due to the aperture at its centre. In other words, the cross-sectional area of a conventional armature at the centre, or pivot portion is much less than the cross-sectional area at either arm portion.

It is desired to provide an improved armature that causes a better dynamic response in a torque motor and wherein magnetic flux flows more easily through the armature.

### SUMMARY

According to an aspect of the present disclosure there is provided a magnetic armature for a torque motor, comprising a pivot portion and at least one arm portion extending from the pivot portion, wherein the smallest cross-sectional area of the armature at the pivot portion is at least 60%, and optionally 70%, 80%, 90% or 100% of the smallest cross-sectional area of the armature at the at least one arm portion.

It has been found that conventional armatures suffer from saturation of magnetic flux at the centre, or pivot portion due to the limited cross-sectional area of this portion compared with that of the arm portion. It has been recognised that magnetic flux flow through a magnetic armature for a torque motor can be improved by limiting the difference in cross-sectional area between the pivot portion and the arm portion. This provides an improved dynamic response of a torque motor in response to a magnetic flux flowing through the armature, and reduces saturation of the magnetic flux at the centre, or pivot portion. Saturation occurred in conventional armatures due to the flux flow (Φ) through the armature being proportional to the magnetic induction, B and cross-sectional area, A, where Φ = B*A.

The smallest cross-sectional area of the armature at the pivot portion may be substantially the same as or greater than the smallest cross-sectional area of the armature at the at least one arm portion. In the present disclosure, "substantially the same" is intended to mean that the first component or measurement referred to is within +/- 5% of the second component or measurement referred to.

The armature may have a longitudinal axis, and the cross-sectional area of the armature, measured perpendicular to the longitudinal axis, may not decrease and/or increase by more than 30%, 20%, 10%, 5% or 2% along at least the pivot portion and the at least one arm portion.

The armature may comprise a notch, void or aperture in the at least one arm portion. Such arrangements may have less material than conventional armatures due to the notch, void or aperture, allowing a mass and/or material reduction. Alternatively, or additionally, the armature may comprise a protuberance or projection in the pivot portion. Providing a notch, void, aperture, protuberance or projection allows the centre of gravity to be shifted closer to the pivot axis of the armature. This provides the further advantages of a better mass balance of the armature, or spring, armature, flapper assembly (see below).

The armature may be a single-piece of material, and the material may comprise at least one of nickel and/or cobalt, and/or an alloy including at least one of nickel and/or cobalt. For example, the armature may be made from an iron-nickel alloy. The armature may comprise an opening in the pivot portion, and the smallest cross-sectional area of the armature at the pivot portion may extend through the opening.

The at least one arm portion of the armature may comprise first and second arm portions each extending from the pivot portion, wherein preferably the first and second arm portions extend in opposite directions from the pivot portion. The first and second arm portions may form part of respective first and second armature arms.

The armature may be symmetrical about a longitudinal and/or lateral centreline, for example a longitudinal and/or lateral centreline that divides the armature in half along its length or width, respectively.

According to an aspect of the present disclosure there is provided a torque motor comprising at least one electromagnetic coil and an armature as described above, wherein the at least one electromagnetic coil surrounds the at least one arm portion of the armature.

The at least one arm portion of the armature may be defined by the portion of the armature surrounded by the electromagnetic coil.

The at least one electromagnetic coil may comprise first and second electromagnetic coils, wherein optionally the first electromagnetic coil surrounds the first arm portion as referred to above, and/or the second electromagnetic coil surrounds the second arm portion as referred to above. The first arm portion of the armature may be defined by the portion of the armature surrounded by the first electromagnetic coil, and the second arm portion of the armature may be defined by the portion of the armature surrounded by the second electromagnetic coil.

The torque motor may further comprise a flapper coupled to the armature at the pivot portion, wherein the flapper extends through a or the opening in the armature at the pivot portion.

The torque motor may further comprise a resilient member coupled to the armature, for opposing movement of the armature about the pivot portion. The resilient member may extend perpendicular to the longitudinal axis of the armature, and may comprise a spring. The resilient member may form part of a torsion bridge that preferably connects the flapper and/or armature to a housing or stationary portion of the torque motor.

According to an aspect of the present disclosure there is provided an electrohydraulic valve comprising an armature or torque motor as described above.

The electrohydraulic valve may further comprise a hydraulically controlled device wherein, in use, fluid pressure and/or fluid flow to the hydraulically controlled device is controlled by movement of the armature.

The armature may be directly connected to the flapper. Movement of the armature may control fluid pressure and/or fluid flow to the hydraulically controlled device due to its connection to the flapper.

The electrohydraulic valve may be a servovalve. The electrohydraulic valve may be a single-stage, dual-stage or multi-stage electrohydraulic valve or servovalve.

According to an aspect of the present disclosure there is provided a method of controlling a torque motor or an electrohydraulic valve as described above, comprising moving the armature about the pivot portion to actuate the torque motor or electrohydraulic valve.

According to an aspect of the present disclosure there is provided a method comprising providing an armature, torque motor or electrohydraulic valve as described above.

According to an aspect of the present disclosure there is provided a method comprising:
providing a magnetic armature for use in a torque motor, the armature comprising a pivot portion and at least one arm portion extending from the pivot portion;
modifying the armature such that the smallest cross-sectional area of the armature at the pivot portion is at least 60%, and optionally 70%, 80%, 90% or 100% of the smallest cross-sectional area of the armature at the at least one arm portion; and/or
modifying the armature to reduce a cross section of the at least one arm portion, and/or increase a cross-section of the pivot portion; and/or
modifying the armature such that the smallest cross-sectional area of the armature at the pivot portion is substantially the same as the smallest cross-sectional area of the armature in the at least one arm portion.

The step of modifying may comprise machining the armature, for example machining a notch, void or aperture in the at least one arm portion of the armature.

The method may be a method of modifying an existing armature, or a method of reengineering an armature.

The method may comprise modifying the armature such that the smallest cross-sectional area of the armature at the pivot portion may be substantially the same as or greater than the smallest cross-sectional area of the armature at the arm portion.

The armature may have a longitudinal axis, and the method may comprise modifying the armature such that the cross-sectional area of the armature, measured perpendicular to the longitudinal axis, may not decrease and/or increase by more than +/-30%, 20%, 10%, 5% or 2% along at least the pivot portion and the at least one arm portion.

The pivot portion of the armature disclosed in any aspects or embodiments herein may alternatively, or additionally be referred to as the centre portion. In any of the aspects or embodiments disclosed herein the at least one arm portion of the armature may comprise first and second arm portions each extending from the pivot portion, wherein preferably the first and second arm portions extend in opposite directions from the pivot portion. In any of the aspects or embodiments disclosed herein the first and second arm portions may form part of respective first and second armature arms. In any of the aspects or embodiments disclosed herein the armature may be symmetrical about a longitudinal and/or lateral centreline, for example a longitudinal and/or lateral centreline that divides the armature in half along its length or width, respectively.

### BRIEF DESCRIPTION OF THE DRAWINGS

Various embodiments will now be described, by way of example only, and with reference to the accompanying drawings in which:
Fig. 1 shows an exploded view of an embodiment;
Fig. 2 shows a perspective view of the embodiment of Fig. 1;
Fig. 3 shows a prior art armature; and
Fig. 4 shows a cross-section of an arm portion of an armature according to an embodiment.

### DETAILED DESCRIPTION

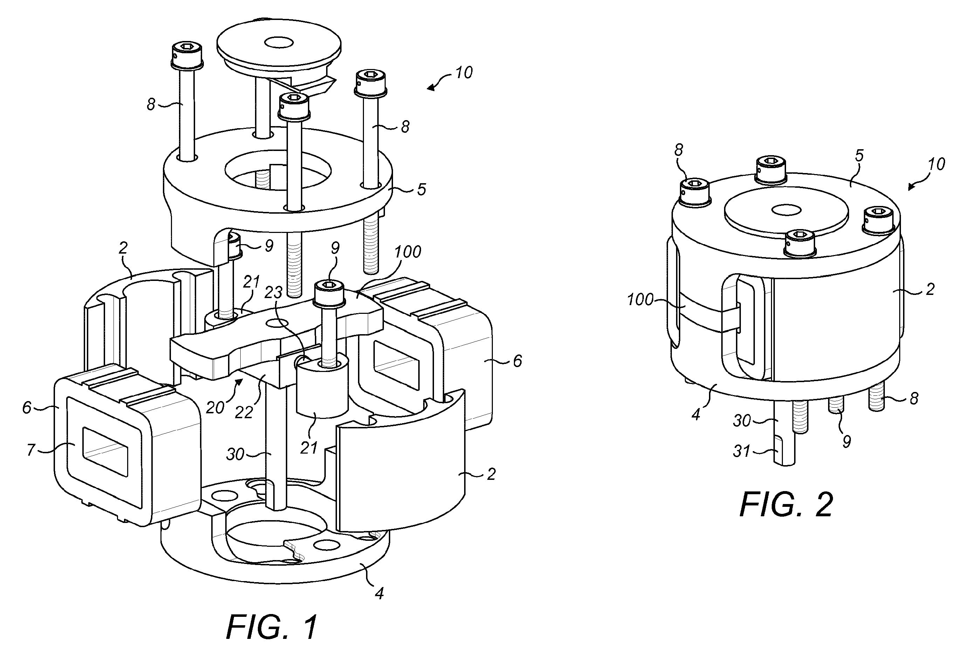

Referring to Figs. 1 and 2, an exploded view (Fig. 1) and a perspective view (Fig. 2) of one embodiment of a torque motor 10 for an electrohydraulic valve (EHV) is shown.

The torque motor 10 includes permanent magnets 2, a lower pole piece 4 and an upper pole piece 5. The torque motor 10 additionally includes electromagnets, each comprising rubber cover 6 and an electromagnetic coil 7. The permanent magnets 2, lower and upper pole pieces 4, 5 and electromagnets are held together by first screws 8, as shown in Fig. 2.

As shown in Fig. 1, a torsion bridge 20 is coupled to the lower pole piece 4 using second screws 9. The torsion bridge 20 comprises two outer connecting portions 21. The second screws 9 extend through apertures in the outer connecting portions 21, into corresponding apertures in the lower pole piece 4 and connect to the torque motor housing (not shown) to couple the torsion bridge 20 to the lower pole piece 4. The torsion bridge 20 further comprises a central connecting portion 22 that is coupled to each of the outer connecting portions 21 by respective resilient members 23 (only one resilient member 23 is shown in Fig. 1). In the illustrated embodiment, the resilient members 23 are in the form of cylindrical bars extending between the central connecting portion 22 and the outer connecting portions 21.

A flapper 30 extends through and is coupled to the central connecting portion 22 of the torsion bridge 20 such that it moves with the central connecting portion 22 of the torsion bridge 20.

An armature 100 is also coupled to the central connecting portion 22 of the torsion bridge 20, as well as the flapper 30, such that it moves with the central connecting portion 22 of the torsion bridge 20, and with the flapper 30. The centre, or pivot portion of the armature 100 comprises an aperture into which the flapper 30 extends. The armature 100 comprises first and second arms that extend from the centre, or pivot portion as shown in Fig. 1.

The armature 100, flapper 30, central connecting portion 22 and resilient members 23 form a spring, armature, flapper assembly ("SAFA"). The SAFA moves as a single unit relative to the remainder of the torque motor 10 components. The outer connecting portions 21 do not move with the SAFA due to their connection to the torque motor housing via lower pole piece 4 and via second screws 9.

In use, the SAFA can rotate around the axis of the resilient members 23. During such rotation, the armature 100 pivots about its centre, or pivot portion, and this causes the lower end 31 (see Fig. 2) of the flapper 30 to move left and right. When the torque motor is part of an electrohydraulic valve, the lower end 31 of the flapper extends into a flow of hydraulic fluid. Thus, the left and right movement of the lower end 31 of the flapper 30 controls flow of hydraulic fluid in the electrohydraulic valve by opening and closing nozzles in the valve body (not shown).

When mounted (see Fig. 2), the electromagnetic coils 7 of the electromagnets surround respective portions of the first and second arms of the armature 100. The electromagnets are mounted between the lower pole piece 4 and the upper pole piece 5 and are additionally connected to a source of electrical current (not shown). Rubber covers 6 are provided around electromagnetic coils 7 to avoid damage during vibrations. The rotational position of the armature 100, and hence movement of the flapper 30, is controlled by energising the electromagnetic coils 7 of the electromagnets. The position of the flapper 30, i.e. left or right, depends on the direction of electrical current applied to the electromagnetic coils 7, and is also proportional to the input electrical current.

The permanent magnets 2, lower pole piece 4, upper pole piece 5 and armature 100 are all formed from a magnetically permeable material. For example, the permanent magnets 2 may be made from Aluminium, Nickel and/or Cobalt. The lower pole piece 4, upper pole piece 5 and armature 100 may be made from a soft magnetic, e.g. a Nickel Iron alloy.

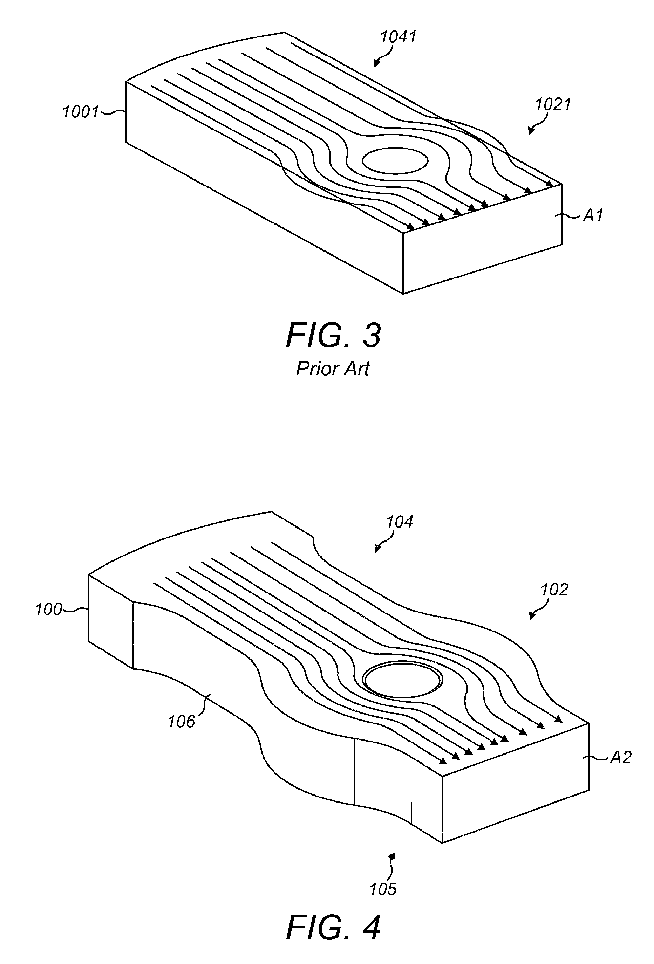

Referring now to Fig. 3, a cross-section through a prior art armature 1001 is shown. The centre portion 1021 of the armature 1001 has a cross-sectional area that is much smaller than the smallest cross-sectional area of the arm portion 1041. As such, the magnetic flux induced in the arm portion 1041 of the armature 1001 is lost as it travels through the centre portion 1021 of the armature 1001, due to the large reduction in cross-sectional area between the arm portion 1041 and the centre portion 1021.

Saturation of magnetic flux can also occur due to the cross-sectional area of the arm portion 1041 being much larger than the cross-sectional area of the centre portion 1021. That is, an increase in electrical current applied to electromagnetic coils surrounding the armature 1001 will not result in an increase in magnetic flux through the armature 1001.

Fig. 4 shows a cross-section through a magnetic armature 100.

As can be seen in Fig. 4, notches 106 are present in the arm of the armature 100 to define first arm portion 104 and second arm portion 105. In Fig. 4 the second arm portion 105 is shown partially cut away to illustrate its cross sectional area A2.

The smallest cross-sectional area at the centre, or pivot portion 102 of the armature 100 is not significantly less than the smallest cross-sectional area at the arm portions 104, 105, i.e. where the magnetic flux is induced by the electromagnetic coils 7. In embodiments, the smallest cross-sectional area of the armature at the pivot portion is at least 60%, and optionally 70%, 80%, 90% or 100% of the smallest cross-sectional area of the armature at the at least one arm portion.

As illustrated in Fig. 4, the cross-sectional areas referred to herein are preferably perpendicular to the longitudinal axis of the armature 100. For example, the cross-sectional area A2 of the second arm portion 105 is the smallest cross-sectional area of the second arm portion 105 and taken perpendicular to the longitudinal axis of the armature 100.

Thus, it can be seen that there is no large reduction in the cross-sectional area of the armature between the arm portions 104, 105 of the armature 100 and the centre portion 102 of the armature 100. This reduces the loss of magnetic flux induced in the arm portions 104, 105 of the armature 100 as it travels through the armature 100. Saturation of the magnetic flux in the centre portion 102 is reduced.

It will be appreciated that the armature 100 also has a reduced mass or weight when compared to a prior art armature 1001, due to the notch 106. This reduces material costs and also improves the response of the armature 100 to an input electrical current in the electromagnetic coils 7.

Furthermore, the armature 100 has a better mass balance when compared to conventional armatures. This is due to the centre of mass being shifted towards the centre of the armature 100 as a result of, for example, the notches 106 removing mass from the arms of the armature. A better mass balance also improves the response of the armature 100 to an input electrical current in the electromagnetic coils 7.

The present disclosure generally provides an armature having an improved dynamic response to an input electrical current in the electromagnetic coils of the torque motor. This is due to the improved magnetic flux flow through the armature, as well as the reduced mass and improved mass balance described above. Saturation of magnetic flux is reduced in the centre portion of the armature as well.

Although the present disclosure has been described with reference to the embodiments described above, it will be understood by those skilled in the art that various changes in form and detail may be made.

For example, the armature 100 of the aspects or embodiments described above could be provided with apertures in the arm portion instead of the notches 106 shown. This would reduce the cross-sectional area in the same manner, providing similar benefits to the torque motor.

Instead of the cross-sectional area of the arm being decreased by providing notches, the cross-sectional area of the centre portion of the armature could be increased, for example by providing one or more protuberances or projections in said pivot portion.

The plate may have a constant cross-sectional area throughout the centre portion or the one or more arm portions, and/or may incorporate rounded edges where a notch, void, aperture, protuberance or projection is provided.

## Claims

1. A magnetic armature for a torque motor, comprising a pivot portion and at least one arm portion extending from said pivot portion, wherein the smallest cross-sectional area of said armature at said pivot portion is at least 60% of the smallest cross-sectional area of said armature at said at least one arm portion.

2. An armature as claimed in claim 1, wherein the smallest cross-sectional area of said armature at said pivot portion is substantially the same as or greater than the smallest cross-sectional area of said armature at said arm portion.

3. An armature as claimed in claim 1 or 2, wherein said armature has a longitudinal axis, and the cross-sectional area of said armature, measured perpendicular to the longitudinal axis, does not decrease by more than 30% along at least said pivot portion and said at least one arm portion.

4. An armature as claimed in claim 1, 2 or 3, further comprising a notch, void or aperture in said at least one arm portion.

5. An armature as claimed in any preceding claim, further comprising a protuberance or projection in said pivot portion.

6. An armature as claimed in any preceding claim, further comprising two arm portions each extending from said pivot portion.

7. An armature as claimed in any preceding claim, wherein said armature is a single-piece of material.

8. An armature as claimed in claim 7, wherein said material comprises nickel and/or cobalt, and/or an alloy including at least one of nickel and/or iron.

9. A torque motor comprising at least one electromagnetic coil and an armature as claimed in any preceding claim, wherein said electromagnetic coil surrounds said at least one arm portion of said armature.

10. A torque motor as claimed in claim 9, wherein said at least one arm portion of said armature is defined by the portion of the armature surrounded by said electromagnetic coil.

11. A torque motor as claimed in any preceding claim, further comprising a flapper coupled to said armature at said pivot portion, wherein said flapper extends through a flapper opening in said armature at said pivot portion.

12. A torque motor as claimed in any preceding claim, further comprising a resilient member coupled to said armature, for opposing movement of said armature about said pivot portion.

13. An electrohydraulic valve comprising an armature or torque motor as claimed in any preceding claim.

14. An electrohydraulic valve as claimed in claim 13, further comprising a hydraulically controlled device wherein, in use, fluid pressure and/or fluid flow to the hydraulically controlled device is controlled by movement of said armature.

15. A method of controlling a torque motor or an electrohydraulic valve as claimed in any of claims 9-14, comprising moving said armature about said pivot portion to actuate said torque motor or electrohydraulic valve.
